# EUROPEAN PATENT APPLICATION

(11) **EP 3 216 700 A1**
(43) Date of publication of application: **13.09.2017**
(21) Application number: 17159960.8
(22) Date of filing: 08.03.2017
(51) Int. Cl.: B64D 35/00, F16D 43/21

(54) **PROPELLER PROPULSION DEVICE**

(30) Priority: 08.03.2016 IT UA20161457
(71) Applicant: I.C.P. S.r.l., 14022 Castelnuovo don Bosco (IT)
(72) Inventor: RAZZANO, Tancredi, 14020 PIOVA' MASSAIA (IT)
(74) Representative: Lovino, Paolo

(57) **Abstract**

A propeller propulsion assembly for an aircraft has a transmission shaft (2), which extends along an axis (3) and ends with an attachment portion (4) on which a propeller is mounted; the shaft (2) is driven by a transmission device (29) having a first body (15) coaxial and rotating relative to the shaft (2), a second body (6) coaxial and angularly fixed relative to the shaft (2) and an elastic device (8) exerting a thrust on the second body (6) to arrange said bodies in a reference position and compensate relative angular movements around said reference position. The assembly (1) further comprises a clutch (5) which is normally engaged to transmit drive torque to the first body (15) and is configured so as to automatically disengage when the resulting torque becomes a braking torque and exceeds a given threshold.

## Description

The present invention relates to a propeller propulsion assembly for an aircraft.

As known, in aircraft, propeller propulsion assemblies consist of a propeller and a transmission driven by a thermal engine. The intake, compression, combustion and exhaust phases of the thermal engine are distinguished by different pressures in the cylinders of the engine and, therefore, by different drive torques. This difference tends to cause a variation in the instantaneous angular speed of the drive shaft and is reflected along the transmission which transmits motion to the propeller. The high moment of inertia of the propeller tends instead to rotate the transmission and drive shaft at substantially constant angular speed when the thermal engine operates at a given speed of rotation.

The instantaneous angular speed variations are counter to the high moment of inertia of the propeller when the latter generates a higher counter-torque than the instantaneous drive torque of the drive shaft in particular operating conditions (i.e. during start-up, slowing down and stopping of the thermal engine). The difference between the torque of the drive shaft and the counter-torque of the propeller causes torsional stress on the drive shaft and on the transmission members, and these stresses often lead to breakage of such components.

To limit these problems, generally, the known solutions are provided with compensation systems which absorb the torque peaks, but such systems cannot sufficiently dampen the torsional stress in the case of high decelerations of the thermal engine.

The purpose of the present invention is to provide a propeller propulsion assembly for an aircraft, which solves the above problem in a simple and economical manner and which is preferably relatively compact.

According to the present invention a propeller propulsion assembly for an aircraft is made according to claim 1.

The invention will now be described with reference to the accompanying drawings, which illustrate a non-limiting embodiment thereof, in which:
- figure 1 is a cross-section view of a preferred embodiment of the propeller propulsion assembly for an aircraft according to the present invention; and
- figures 2 and 3 are perspectives showing some components of the propulsion assembly in figure 1; and
- figures 4 to 6 illustrate, with some parts removed for clarity and schematically, a detail of the propulsion assembly in figure 1 under different operating conditions.

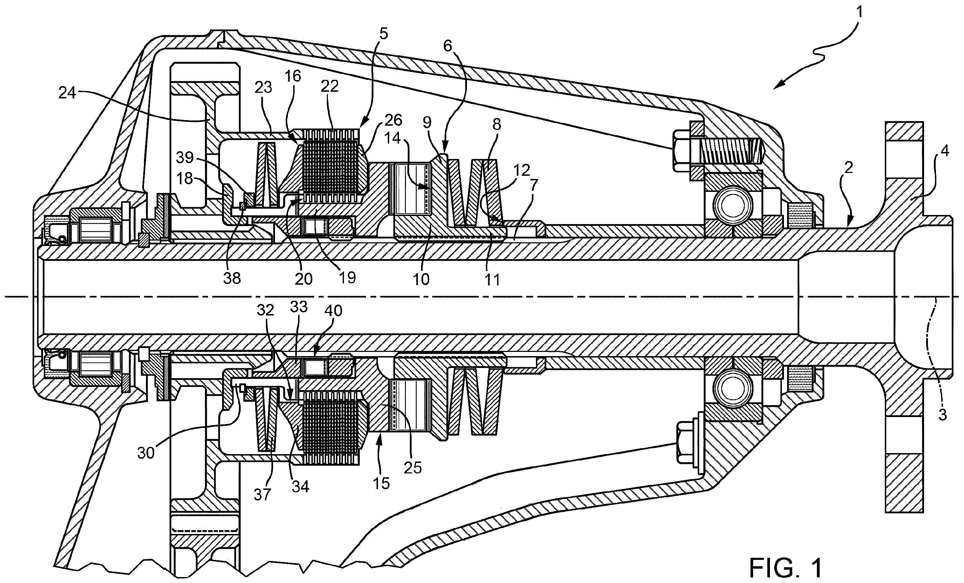

In figure 1, reference numeral 1 denotes a propeller propulsion assembly for an aircraft. The assembly 1 is driven by a drive shaft which forms part of an internal combustion engine (not shown) and comprises a propeller (not shown) and a transmission shaft 2. The latter extends along an axis 3, is a driven shaft and ends with an attachment portion 4 which the propeller is mounted on.

The assembly 1 further comprises a clutch 5 and an annular body 6 which is coaxial to the shaft 2, is keyed onto the latter in a fixed angular position and preferably, slides axially under the thrust of an elastic device defined in particular by one or more cup springs 8. More specifically, the body 6 comprises an outer ring flange 9 and a central hub 10, which is internally grooved and is coupled to a grooved portion 7 of the shaft 2.

The hub 10 ends axially with a collar 11, which protrudes axially in relation to the flange 9 towards the portion 4; the springs 8 are keyed on the outer surface of the collar 11 and are arranged in axial abutment against a stop shoulder 12, which, in particular, is defined by a sleeve keyed on the outer surface of the shaft 2 in a fixed axial position.

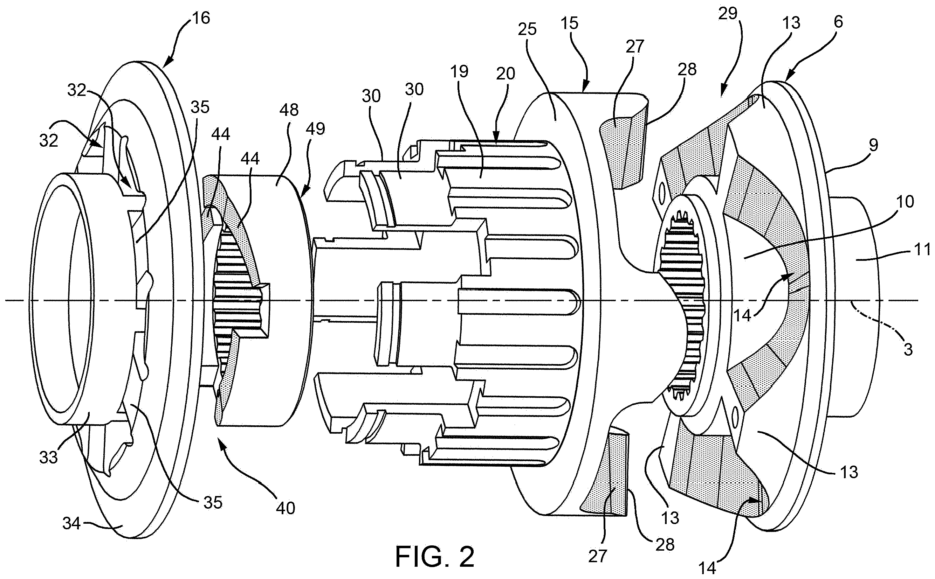

With reference to figure 2, in the particular example shown, the body 6 further comprises a plurality of appendices 13, which protrude from the flange 9 parallel to the axis 3 in the opposite direction to the collar 11 and are spaced around the axis 3 so as to define, in the circumferential direction, a series of recesses or dips 14, each with a concave curved profile, without sharp edges or steps, if seen in a corresponding radial direction.

As shown in figures 1 to 3, the clutch 5 is placed between the body 6 and the drive shaft and, in particular, is coaxial to the body 6 and the shaft 2. The clutch 5 comprises a support body 15 and a annular plate 16, which are coupled in an angularly fixed and axially sliding manner and are rotatable around the axis 3 in relation to the body 6 and the shaft 2. Preferably, the body 15 is fitted directly on the outer surface of the shaft 2 so as to slide and is arranged in axial abutment against a shoulder to stay in a fixed axial position under the thrust of the springs 8. Said shoulder is defined by a bearing or fifth wheel 18 of the friction type, having an axial thrust function.

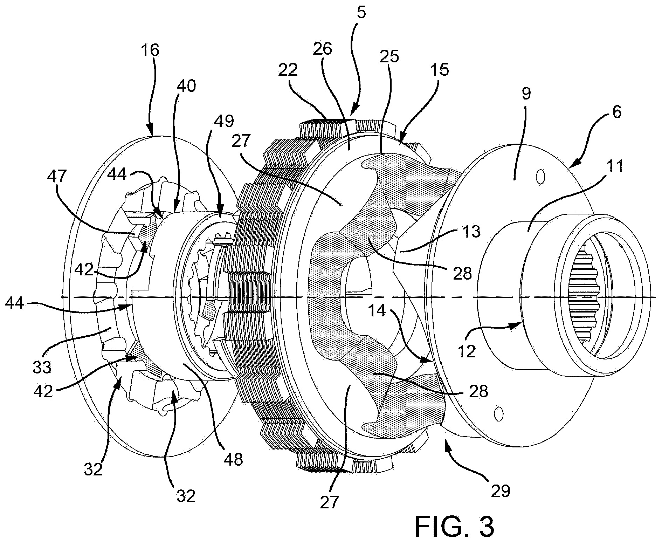

With reference to figures 2 and 3, the body 15 comprises a cylindrical wall 19, which is arranged axially between the body 6 and the plate 16 and has an outer surface 20 provided with axial guide grooves. The clutch 5 comprises a pack of friction discs 22, consisting of driven discs and drive discs axially alternated. As shown in figure 1, the driven disks are coupled to the surface 20 in an angularly fixed and axially mobile position, while the drive discs are supported by a bell-shaped body 23, also in an angularly fixed and axially movable relative position. In particular, the bell-shaped body 23 is fixed relative to a body gear 24, which is fitted on the shaft 2 in a coaxial rotating position, for example, by means of a friction bearing, forms part of a gear transmission of the assembly 1 to vary the gear ratio between the drive shaft and the shaft 2 and preferably supports the bearing 18.

In this case, the axis of the drive shaft and the axis 3 are parallel and spaced. According to variants not shown, the drive shaft and shaft 2 are coaxial.

The body 15 further comprises an annular flange 25, which projects outwards from an axial end of the wall 19 so as to define an axial stop for the pack of friction discs 22. In particular, the clutch 5 comprises a spacer 26, which is arranged axially between the pack of discs 22 and the flange 25 at the end of the surface 20, where there are no axial grooves, and defines an axial shoulder to the pack of discs 22.

With reference to figures 2 and 3, advantageously the body 15 further comprises a plurality of lobes 27 which protrude from the flange 25 parallel to the axis 3 in the opposite direction to the wall 19, are spaced around the axis 3 so as to leave corresponding spaces for the appendices 13 and end with respective rounded apices 28 each engaging a relative recess 14. The assembly of lobes 27 and recesses 14 defines a transmission device 29 that transfers drive torque from the body 15 to the body 6 and compensates (and preferably dampens) angular oscillations or pulses between the bodies 6 and 15 during torque transmission. In particular, the concave curved profile of the recesses 14 is wider than the convex curved profile of the apices 28, so that the body 15 is able to float angularly with respect to the body 6 around a reference position, in which the apices 28 are arranged in the middle and at the bottom of the respective recesses 14. Specifically, this reference position corresponds to an assembly configuration.

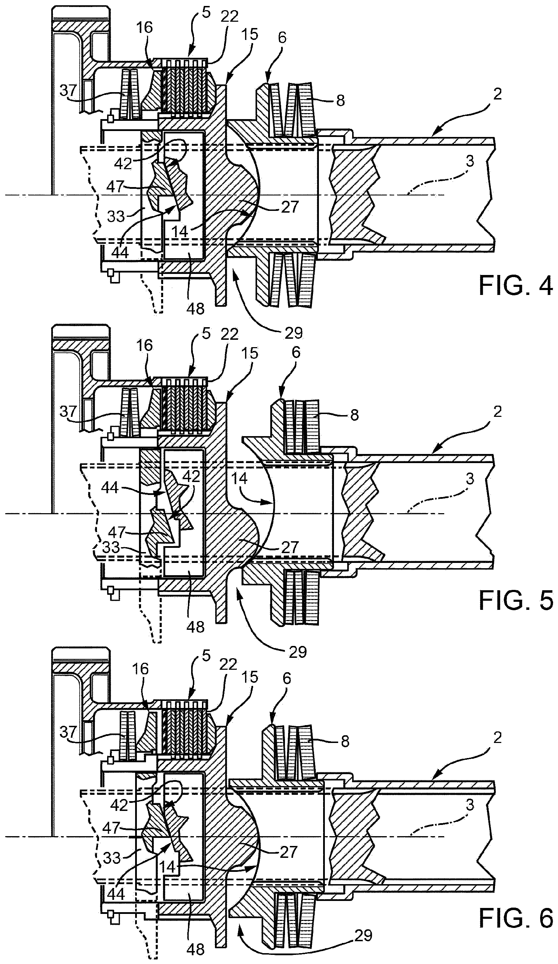

If the body 15 rotates with respect to the reference position, the apices 28 of the lobes 27 tend to move away from the bottom of the recesses 14 and to slip on the sloping sides of said recesses 14, so that the body 6 reverses axially against the axial thrust of the springs 8 (Figures 5 and 6).

As mentioned above, the springs 8 are pre-loaded and exert an axial thrust on the flange 9 towards the flange 25 so as to automatically return the device 29 to the reference position (fig. 4) thanks to the inclination of the sides of the recesses 14. The body 15 moves away from the reference position, one way or another, to adopt an angular position out of phase (figures 5 and 6) when the difference between the drive torque transmitted from the pack of discs 22 to the body 15 and the resilient torque transmitted from the propeller to the body 6 exceeds a predetermined threshold defined by the preload and / or the rigidity of the springs 8.

With reference to figures 2 and 3, the body 15 further comprises a plurality of guide elements 30, which are parallel to the axis 3, protrude from the wall 19 in the opposite direction to the flange 25, are angularly spaced from each other and engage, in an axially sliding and angularly fixed manner, respective holes 32 made in the plate 16. In particular, the plate 16 comprises a hub 33 fitted around the shaft 2, an outer annular flange 34 and a plurality of radial spokes 35 joining the hub 33 to the flange 34 and defining the holes 32 in a circumferential direction.

As can be seen in Figure 1, the coupling between the holes 32 and the elements 30 blocks the plate 16 with respect to the body 15 and axially guides the plate 16 between an advanced position and a retracted position, under the axial thrust of an elastic device, preferably defined by one or more cup springs 37. In the advanced position, the pack of discs 22 is clamped between the flanges 34 and 25 and transmits the movement from the bell-shaped body 23 to the body 15 (in other words, the plate 16 performs a "push-disc" function); in the retracted position, the discs 22 are disengaged so that the body 6 and shaft 2 rotate together freely and independently of the rotation of the bell-shaped body 23 and of the drive shaft.

The pack of springs 37 is coaxial to the plate 16, is fitted around the guide elements 30, is arranged axially between the spokes 35 and a shoulder 38 and is pre-loaded to keep the plate 16 in the advanced position. The shoulder 38 is supported by the guide elements 30 and in particular is defined by a single ring fitted to the outer surface of the guide elements 30. Advantageously, a spacer 39 is axially arranged between the pack of springs 37 and the shoulder 38: by using a spacer with a different axial amplitude it is possible to adjust the pre-loading of the springs 37.

Advantageously, the guide members 30 are defined by respective tabs which, on one side extend to extend the wall 19 and, on the other, are axially supported against the bearing 18. In particular, body 15 is defined by a single piece. According to variants not shown, the guide elements 30 may be defined by pieces separate from the wall 19 and / or flange 25; or the springs 37 could be replaced by another type of elastic device.

With reference to figures 2 and 3, the clutch 5 further comprises a cam and tappet device 40 configured so as to retract the plate 16 against the thrust of the springs 37 and thus detach the discs 22 automatically when the body 15 and the plate 16 are out of phase with respect to the body 6 and the shaft 2 by a given angle. This angle is reached when the drive torque transmitted to the body 15 falls below the inertia torque of the propeller and the shaft 2, and the difference between the two torque values exceeds a given disengagement threshold.

The device 40 comprises one or more cam followers 42 (fig. 3), carried by the plate 16 in a fixed position, and one or more cams 44 (fig. 2) angularly fixed to the body 6 and to the shaft 2 and axially fixed with respect to the body 15. In the specific example shown, the cam followers 42 are defined by portions of the plate 16 and are in friction contact with the cams 44. In particular, the plate 16 comprises a plurality of teeth 47 projecting from the hub 33 parallel to the axis 3, angularly spaced from each other and axially delimited by ramp front surfaces defining the cam followers 42 and facing the cams 44.

According to variants not shown, the cam followers 42 are defined by rolling bodies supported by the hub 33.

In the same configuration of the device 40, the disengagement threshold is defined by the pre-loading and / or the rigidity of the set of springs 37 and 8 and by the angle of the cam ramps 44 and cam followers 42. The automatic disengagement avoids the recoil that the propeller torque would cause on the gear 24, so as to eliminate jamming and impacts and/ or the emergence of high torsion stresses in the components of the assembly 1 when the thermal engine is slowed down or stopped.

The automatic disengagement also facilitates start-up and running at low speeds, since the strongest rotation irregularities and instant torque variations occur in these phases, eliminating the propeller recoil braking the rotation of the engine.

In the propulsive phase, then, the variation of angular torque of the engine increases with respect to that of the propeller, so that the clutch 5 closes: in this phase, the support of the lobes 27 on the sides of the recesses 14 of the device 29 is also inverted so that acceleration is more gradual.

Again with reference to figures 2 and 3, the cams 44 are defined by ramp surfaces, for example helical surfaces, which axially circumscribe a ring 48 and are distributed along a circumference around the axis 3 in spaced positions. In particular, the ring 48 is at least partially housed inside the wall 19. Preferably, the ring 48 is internally grooved, engages the grooved portion 7 and, at the opposite end with respect to the cams 44, is axially delimited by a surface 49 which is in friction contact against an inner axial shoulder of the body 15.

As can be seen in figure 4, in the reference angular position, the cams 44 are preferably slightly spaced from the cam followers 42 (this clearance is not clearly visible in figure 4 for reasons of scale) so as to limit chance contact in the tangential direction between said components and thus avoid the occurrence of undesirable impact and stresses. In particular, the angle between the cams 44 and the cam followers 42 is about 10-15°.

Figure 5 shows the configuration of the device 40 when the thermal engine is accelerated and transmits the maximum drive torque to the propeller. In particular, the drive torque is transmitted from the clutch 5 to the shaft 2 by means of the device 29 which compensates the relative rotations between the bodies 15 and 6. In this condition, the teeth 47 are spaced further from the cams 44 without touching other parts of the ring 48.

When the acceleration command of the thermal engine is released, the drive torque of the bell-shaped body 23 decreases. At the same time, the rotation of the propeller, by inertia, tends to continue. If the resulting torque between the bell-shaped chamber 23 and the shaft 2 becomes braking and does not exceed the disengagement threshold, the body 15 and the plate 16 rotate with respect to the body 6 and the ring 48 and recover the angular clearance which was provided in the reference position between the cams 44 and the cam followers 42, while the device 29 performs an angular compensation and possibly a damping function.

If the resulting braking torque exceeds the disengagement threshold, as shown in fig. 6, the rotation of the plate 16 with respect to the ring 48 causes contact and thus the rising of the cam followers 42 on the cams 44 and, thereby, an automatic displacement of the plate 16 towards the retracted position against the action of the springs 37 and under the guidance of the guide elements 30. During retraction, the plate 16 relaxes the axial pressure on the pack of disks 22, which therefore tend to slip angularly with each other preventing the high moment of inertia of the propeller from causing "tears" or jamming of the other components of the assembly 1 or the drive shaft. At the same time, the slipping between the discs 22 dissipates energy to dampen the inertia of the shaft 2 and the propeller.

If the acceleration control is restored, when the resulting torque is once again the drive torque of the body 15 towards the body 6, the body 15 and the plate 16 rotate toward the reference position under the thrust of the springs 8 and 37. In particular, the springs 37 push the plate 16 toward the advanced position: with this thrust, the cam followers 42 descend along the cams 44, which thus assist the plate 16 and, consequently, the body 15 to rotate with respect to the body 6 towards the reference position, performing the same return action exerted by the sides of the recesses 14. Obviously, by moving to the advanced position, the plate 16 increases the axial pressure on the pack of discs 22 as far as a complete new coupling.

From the above it is evident that the clutch 5, of the automatic disengagement type, completely eliminates the jamming and torsion stresses that would be caused by the high moment of inertia of the propeller when the thermal engine is slowed down or stopped. In particular, as explained in detail above, the body 6 and ring 48 tend to continue to rotate under the inertial action of the shaft 2 and the propeller, while the body 15 and the plate 16 tend to slow down under the command of the drive shaft, so that the cams 44 act on the cam followers 42 and open the plate 16 against the action of the springs 37 in order to de facto detach the thermal engine of the propeller.

The automatic disengagement caused by the device 40 is gradual due to the configuration of the cams 44 and the fact that the device 40 acts directly on the plate 16 without affecting the body 15 and / or the pack of discs 22.

It is further evident that the aforementioned construction features allow the clutch 5 to be extremely compact, to have a relatively small number of pieces and to be relatively simple to assemble. In particular, the aforementioned construction features allow the use of springs 8 and 37 which are of standard type and, moreover, provide high loads with limited dimensions. It is then relatively easy to adjust the pre-loading which determines the return of the body 15 to the reference position and thus the disengagement threshold beyond which the plate 16 is automatically retracted from the device 40.

From the above, lastly it appears evident that modifications and variations may be made to the assembly 1 described with reference to the appended drawings while remaining within the sphere of protection of the present invention as defined in the appended claims.

In particular, the clutch 5 may be separate from the lobes 27 and possibly be arranged on a transmission axis other than the axis 3; and / or the plate 16 could be shaped differently and / or dragged in rotation by guides other than the elements 30.

In addition, the group 1 may be provided with additional flexible couplings or damping devices, arranged in series with the clutch 5 and the device 29, for example at the gear 24.

## Claims

1. A propeller propulsion assembly for an aircraft, comprising:
- - a transmission shaft (2), which extends along an axis (3) and ends with an attachment portion (4);
- - a propeller mounted on said attachment portion (4);
- - a transmission device (29) comprising:
a) a first body (15), which is coaxial and rotatable with respect to said transmission shaft (2);
b) a second body (6), which is coaxial and angularly fixed with respect to said transmission shaft (2);
c) a first elastic device (8) exerting a thrust on said second body (6) and configured so as to arrange said first and second body (6) in a reference position and compensate relative angular movements around said reference position;
**characterized by** further comprising a clutch (5) which is normally engaged to transmit drive torque to said first body (15) and is configured so as to automatically disengage when the resulting torque becomes a braking torque and exceeds a given threshold.

2. The assembly according to claim 1, **characterized in that** said first body (15) is provided with lobes (27) protruding parallel to said axis (3); said second body (6) being provided with recesses (14) engaged by said lobes (27) with freedom of relative angular motion.

3. The assembly according to claim 1 or 2, **characterized in that** said clutch (5) and said transmission device (29) are coaxial.

4. The assembly according to claim 3, **characterized in that** said clutch (5) comprises:
- a pack of friction discs (22);
- a second elastic device (37);
- a first and a second annular flange (25,34), which are arranged on opposite axial sides of said pack of friction discs, are coaxial and rotatable with respect to said transmission shaft (2) and are fixed angularly one with respect to the other; said second flange (34) being axially sliding towards said first flange (25) under the thrust of said second elastic device (37) so as to axially clamp said pack of friction discs (22);
said first flange (25) defining part of said first body (15)

5. The assembly according to any one of the preceding claims, **characterized in that** said clutch (5) comprises:
- a pack of friction discs (22);
- a second elastic device (37);
- a first and a second annular flange (25,34), which are arranged on opposite axial sides of said pack of friction discs, are coaxial and rotatable with respect to said transmission shaft (2) and are fixed angularly one with respect to the other; said second flange (34) being axially sliding towards said first flange (25) under the thrust of said second elastic device (37) so as to axially clamp said pack of friction discs (22);
- a cam and tappet device (40) configured so as to retract said first flange (34) against the thrust of said second elastic device (37) automatically when said first body (15) is out of phase with respect to said reference position by a given angle.

6. The assembly according to claim 5, **characterized in that** said cam and tappet device (40) comprises:
- at least one cam (44) angularly fixed with respect to said second body (6) and axially fixed with respect to said first body (15);
- at least one cam follower (42);
said first flange (34) defining part of a plate (16) which carries said cam follower (42).

7. The assembly according to claim 6, **characterized in that** said clutch (5) comprises:
- a cylindrical wall (19) supporting a plurality of driven friction discs;
- a plurality of guide elements (30), which are parallel to said axis (3), are angularly spaced from each other and protrude with respect to said cylindrical wall (19) so as to engage, in an axially sliding manner and in an angularly fixed manner, respective holes (32) formed in said plate (16).

8. The assembly according to claim 7, **characterized in that** said cam (44) is carried by a ring (48), which at least in part is housed in said cylindrical wall (19).

9. The assembly according to claim 7 or 8, **characterized in that** said guide elements (30) are defined by respective tabs defining an extension of said cylindrical wall (19).

10. The assembly according to any one of claims from 7 to 9, **characterized in that** said second elastic device (37) comprises at least one spring fitted around said guide elements (30).
